# EUROPÄISCHE PATENTSCHRIFT

(11) **EP 1 956 273 B1**
(45) Veröffentlichungstag und Bekanntmachung des Hinweises auf die Patenterteilung: **24.11.2010**
(21) Anmeldenummer: 07101890.7
(22) Anmeldetag: 07.02.2007
(51) Int. Cl.: F16H 63/20, F16H 63/30

(54) **Schaltvorrichtung mit Federeinrichtung für ein Wechselgetriebe**
Switching device with spring device for a change speed gearbox
Dispositif de passage doté d'un dispositif à ressort pour boîte de vitesses

(43) Veröffentlichungstag der Anmeldung: 13.08.2008
(73) Patentinhaber: Getrag Ford Transmissions GmbH, 50735 Köln (DE)
(72) Erfinder: Tessun, Ralf, 51399 Burscheid (DE); Borgschulte, Tobias, 40237 Düsseldorf (DE); Daldrup, Stefan, 50739 Köln (DE)

(56) Entgegenhaltungen:
- EP-A1- 1 267 104
- DE-A1- 1 500 367
- DE-A1- 2 935 590

## Beschreibung

Die Erfindung betrifft eine Schaltvorrichtung für ein Wechselgetriebe, mit einer Hauptschaltwelle, die axial verschiebbar und um ihre Achse drehbar ist und wenigstens einen Schaltfinger aufweist, mit mehreren axial verschiebbaren Schaltstangen, mit denen die Hauptschaltwelle über den Schaltfinger koppelbar ist, um die Schaltstangen mittels der Hauptschaltwelle axial verschieben zu können, und mit einer Federeinrichtung, die einer Drehung der Hauptschaltwelle aus einer Neutralstellung N heraus entgegenwirkt, und die eine erste Schenkelfeder und ein Federelement aufweist.

Eine derartige Schaltvorrichtung ist aus der EP 1 267 104 A1 bekannt. Die dortige Schaltvorrichtung weist eine Steuerachse auf, die in Drehung verstellt wird, um eine Linie von Gänge auszuwählen, und in Translation, um einen Gang auf der ausgewählten Linie einzulegen. Die Steuerachse ist von einer zylindrischen Hülse umgegeben, die in Drehung fest mit der Steuerachse verbunden ist, und welche in Richtung zur Neutralstellung durch zwei gegenwirkende Federn rückgestellt wird.

Eine zweite Schaltvorrichtung für ein Wechselgetriebe ist aus der DE 29 35 590 C2 bekannt. Mit der dortigen Schaltvorrichtung lässt sich ein Wechselgetriebe mit fünf Vorwärtsgängen und einem Rückwärtsgang betätigen. Durch Drehen der Hauptschaltwelle wird über den Schaltfinger eine Verbindung zu einer der Schaltstangen hergestellt. Durch axiales Verschieben der Hauptschaltwelle und entsprechendes axiales Verschieben der mit der Hauptschaltwelle verbundenen Schaltstange lässt sich eine Gangschaltkupplung im Wechselgetriebe betätigen, durch die ein ausgewählter Gang des Wechselgetriebes ein- bzw. ausgelegt werden kann.

Die Federeinrichtung der Schaltvorrichtung in der DE 29 35 590 C2 umfasst eine Schenkelfeder mit zwei Schenkeln und mehreren Wendeln. Die Schenkelfeder ist koaxial zur Hauptschaltwelle angeordnet. Die beiden Schenkel erstrecken sich im Wesentlichen parallel zueinander und in radialer Richtung nach außen. Sie liegen dabei an zwei Seiten eines gehäusefesten Bolzens und eines an der Hauptschaltwelle befestigten Stiftes an. Die Achsen des Bolzens und des Stiftes und die Achse der Schaltwelle sind zueinander parallel und liegen in einer gemeinsamen Ebene, wobei der feststehende Bolzen und der mit der Welle verbundene Stift radial zur Achse der Hauptschaltwelle zueinander versetzt sind. Die Schenkel der Schenkelfeder halten die Hauptschaltwelle in der Neutralstellung N, wobei in dieser Stellung die Schenkel sowohl an dem Bolzen als auch an dem Stift anliegen sollen. Wird die Hauptschaltwelle verschwenkt, so nimmt der Stift den einen der beiden Schenkel gegen die Federkraft der Schenkelfeder mit.

Die Anordnung der Schenkelfeder mit dem feststehenden Bolzen und mit dem sich mit der Hauptschaltwelle drehenden Stift sorgt in der Praxis nicht für eine spielfreie Einstellung der Neutralstellung N. So können bedingt durch Fertigungstoleranzen die Durchmesser des Bolzens und des Stiftes voneinander abweichen. Zudem können die beiden Schenkel der Schenkelfeder nicht zueinander parallel verlaufen, was auch bei gleichen Durchmessern von Bolzen und Stift zu einem Spiel in der Neutralstellung führt. Eine spielbehaftete Neutralstellung lässt keine exakte Positionierung der Hauptschaltwelle zu und kann zu Vibrationen, Klappern und Geräuschen im Fahrbetrieb führen.

Die der Erfindung zugrunde liegende Aufgabe besteht darin, eine Schaltvorrichtung der oben genannten Art bereitzustellen, die eine exakte Positionierung der Hauptschaltwelle in der Neutralstellung N mit einfachen Mitteln ermöglicht.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Gemäß Anspruch 1 zeichnet sich die erfindungsgemäße Schaltvorrichtung dadurch aus, dass ein erster Schenkel der ersten Schenkelfeder als Anschlag dient, gegen den das Federelement die Hauptschaltwelle in die Neutralstellung drückt. In einem bevorzugten Ausführungsbeispiel kann das Federelement als eine zweite Schenkelfeder ausgebildet sein.

Damit der erste Schenkel der ersten Schenkelfeder als definierter Anschlag dienen kann, weist die erste Schenkelfeder vorzugsweise eine gewisse Vorspannung auf. Diese Vorspannung ist so groß bemessen, dass der erste Schenkel der ersten Schenkelfeder durch das Federelement bzw. die Hauptschaltwelle nicht aus einer Position gedrückt wird, die die Neutralstellung N definiert. Die erste Schenkelfeder drückt dabei den ersten Schenkel gegen eine bezogen auf die Drehung der Hauptschaltwelle ortsfeste Auflage, so dass die Position des ersten Schenkels festgelegt ist und dieser als definierter Anschlag für die Hauptschaltwelle dienen kann.

In einem bevorzugten Ausführungsbeispiel ist ein Drehmoment der ersten Schenkelfeder, das auf den Schenkel der ersten Schenkelfeder wirkt, in der Neutralstellung in etwa doppelt so groß wie ein Drehmoment des Federelements, mit dem es in Neutralstellung die Hauptschaltwelle gegen den Schenkel der ersten Schenkelfeder drückt. Damit liegt der erste Schenkel der ersten Schenkelfeder sicher auf der ortsfesten Auflage auf. Um die Hauptschaltwelle aus der Neutralstellung N zu drehen, ist dann für beide Drehrichtungen ein in etwa gleiches Drehmoment notwendig.

Es sei darauf hingewiesen, dass die Einstellung des Drehmomentes der ersten Schenkelfeder und die Einstellung des Drehmomentes des Federelements bzw. der zweiten Schenkelfeder in der Neutralstellung der Hauptschaltwelle über unterschiedliche Parameter erfolgen kann. Dies sind z.B. Federsteifigkeiten der Schenkelfedern und/oder deren Vorspannungen.

Die erste Schenkelfeder und/oder die zweite Schenkelfeder können um die Hauptschaltwelle gewickelt sein. Dabei umgreifen die Wendeln der ersten Schenkelfeder und/oder der zweiten Schenkelfeder die Hauptschaltwelle. Vorzugsweise entspricht dabei ein Innendurchmesser der Wendeln im Wesentlichen einem Außendurchmesser der Hauptschaltwelle. Jedoch ist ein gewisses Spiel zwischen den Wendeln und dem Außendurchmesser der Hauptschaltwelle vorzusehen, damit die Schenkelfedern auch bei maximaler Verdrehung der Hauptschaltwelle ohne Beeinträchtigung arbeiten können.

In einem bevorzugten Ausführungsbeispiel stützen sich der erste Schenkel und/oder ein zweiter Schenkel der ersten Schenkelfeder in Neutralstellung der Hauptschaltwelle an wenigstens einer der Schaltstangen ab. Die erste Schenkelfeder ist dabei momentenfrei um die Hauptschaltwelle gewickelt. Sitzt die erste Schenkelfeder in axialer Richtung gesehen fest auf der Hauptschaltwelle, so gleiten die Schenkel der ersten Schenkelfeder auf den Schaltstangen entlang, auf denen sie sich abstützen, wobei zu beachten ist, dass die Hauptschaltwelle mit einer der Schaltstangen gekoppelt sein kann, so dass dann zwischen Hauptschaltwelle und dieser Schaltstange keine Relativbewegung in axialer Richtung gegeben ist.

Der Schaltfinger der Hauptschaltwelle kann einen Stift aufweisen, mit dem sich die Hauptschaltwelle in Neutralstellung N an dem ersten Schenkel der ersten Schenkelfeder abstützt. Der Stift kann sich parallel zur Achse der Hauptschaltwelle erstrecken.

An dem Stift kann sich ein erster Schenkel der zweiten Schenkelfeder abstützen. Somit werden die Federkräfte der beiden Schenkelfedern auf den Stift geleitet, so dass die Hauptschaltwelle nur mit dem resultierenden Drehmoment der beiden Schenkelfedern auf Torsion belastet wird.

Die Hauptschaltwelle kann einen weiteren oder zweiten Schaltfinger umfassen. Der weitere Schaltfinger kann dabei einen Stift aufweisen, an dem der erste Schenkel der zweiten Schenkelfeder anliegt. Alternativ oder zusätzlich kann der weitere Schaltfinger einen Einspannstift aufweisen, an dem sich der zweite Schenkel der ersten Schenkelfeder abstützt, wodurch die erste Schenkelfeder zumindest in Neutralstellung N unabhängig von der Anlage an einer der Schaltstangen eingespannt ist. Eine bevorzugte Möglichkeit besteht darin, die Einspannung der ersten Schenkelfeder durch den Einspannstift so auszulegen, dass in Neutralstellung N und in jeder anderen Dreh- oder Wählstellung der Hauptschaltwelle sich jeweils nur einer der beiden Schenkel der ersten Schenkelfeder an einer der Schaltstangen abstützt. Dadurch lassen sich die Reibkräfte beim Ein- und Auslegen der Gänge reduzieren.

Ein zweiter Schenkel der zweiten Schenkelfeder kann sich an einer der Schaltstangen abstützen. Damit wird die zweite Schenkelfeder zwischen einem in Drehrichtung gesehen ortsfesten Punkt und Stift des Schaltfingers verspannt, so dass die zweite Schenkelfeder ein Drehmoment auf die Hauptschaltwelle ausübt.

In einem bevorzugten Ausführungsbeispiel erstrecken sich der erste und der zweite Schenkel der ersten Schenkelfeder im Wesentlichen parallel zueinander und stützen sich an einer gleichen Schaltstange ab. Der Abstand der beiden Schenkel zueinander entspricht dabei in etwa einem Durchmesser der Schaltstange. Die Schaltstange ist dabei zwischen den beiden Schenkeln angeordnet.

Der Stift, mit dem sich die Hauptschaltwelle in der Neutralstellung gegen den ersten Schenkel der ersten Schenkelfeder abstützt, kann zwischen den parallel verlaufenden Schenkeln der ersten Schenkelfeder angeordnet sein und ab einem bestimmten Drehwinkel aus der Neutralstellung heraus gegen den zweiten Schenkel stoßen. Dabei durchläuft die Hauptschaltwelle einen Winkelbereich, in dem nur die zweite Schenkelfeder ein Drehmoment auf die Hauptschaltwelle ausübt. Stößt der Stift gegen den zweiten Schenkel, muss bei einem Weiterdrehen der Hauptschaltwelle auch das Drehmoment der ersten Schenkelfeder überwunden werden.

Anhand der in der Zeichnung dargestellten Ausführungsbeispiele soll die Erfindung näher erläutert werden. Es zeigen:
- Figur 1: ein Schaltschema eines Handschalthebels zum Schalten eines Wechselgetriebes mit sechs Vorwärtsgängen und einem Rückwärtsgang;
- Figur 2: in perspektivischer Ansicht eine Schaltvorrichtung;
- Figur 3: die Schaltvorrichtung der Figur 2 von oben;
- Figur 4: einen Ausschnitt der Schaltvorrichtung der Figur 2 aus einer weiteren Perspektive;
- Figur 5: den Ausschnitt der Figur 4 aus einer ersten axialen Richtung;
- Figur 6: den Ausschnitt der Figur 4 aus einer zweiten axialen Richtung;
- Figur 7: mehrere Wählstellungen der Schaltvorrichtung der Figur 2 in Anlehnung an die Darstellung der Figur 5;
- Figur 8: mehrere Wählstellungen einer weiteren Schaltvorrichtung in Anlehnung an die Darstellung der Figur 7;
- Figur 9: einen Ausschnitt einer weiteren Schaltvorrichtung; und
- Figur 10: die Schaltvorrichtung der Figur 9 von vorne.

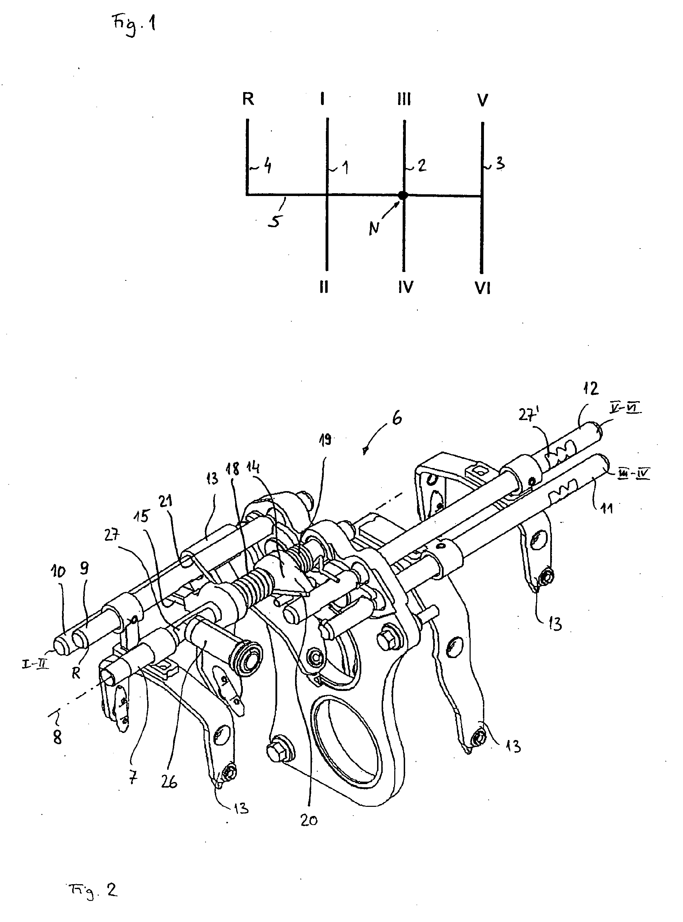

Figur 1 zeigt ein übliches Schaltschema eines Handschalthebels zum Schalten eines Wechselgetriebes per Hand mit sechs Vorwärtsgängen I bis VI und einem Rückwärtsgang R. Die Vorwärtsgänge I, II befinden sich dabei in einer ersten Schaltgasse 1. Entsprechend können die Vorwärtsgänge III, IV einer zweiten Schaltgasse 2 und die Vorwärtsgänge V, VI einer dritten Schaltgasse 3 zugeordnet werden. Der Rückwärtsgang R lässt sich über eine Schaltgasse 4 erreichen. Die Schaltgassen 1, 2, 3, 4 sind über eine Wählgasse 5 miteinander verbunden. Eine Neutralstellung N befindet sich im Kreuzungspunkt der Wählgasse 5 und der Schaltgasse 2 zwischen den Vorwärtsgängen III, IV. Entlang der Wählgasse 5 wirken Rückstellkräfte auf den Handschalthebel, so dass dieser in die Neutralstellung N gleiten kann, soweit keine Kräfte von außen anliegen.

Das in der Figur 1 dargestellte Schaltschema korrespondiert mit einer Schaltvorrichtung 6, wie sie in den Figuren 2 bis 7 dargestellt ist. Die Figuren 2 bis 7 zeigen die Schaltvorrichtung in unterschiedlichen Ansichten, wobei in einigen Figuren nur Teile der Schaltvorrichtung 6 dargestellt sind.

Die in der Figur 2 perspektivisch dargestellte Schaltvorrichtung 6 umfasst eine Hauptschaltwelle 7, die entlang ihrer Achse 8 verschiebbar angeordnet ist und sich um die Achse 8 drehen lässt. Parallel zu der Hauptschaltwelle 7 sind vier Schaltstangen 9, 10,11, 12 angeordnet. Die Schaltstangen 9, 10, 11, 12 lassen sich in axialer Richtung (in Richtung der Achse 8) verschieben. An jeder Schaltstange 9, 10, 11, 12 ist eine Schaltgabel 13 befestigt, durch die sich eine Schaltmuffe einer Gangschaltkupplung (nicht dargestellt) führen lässt.

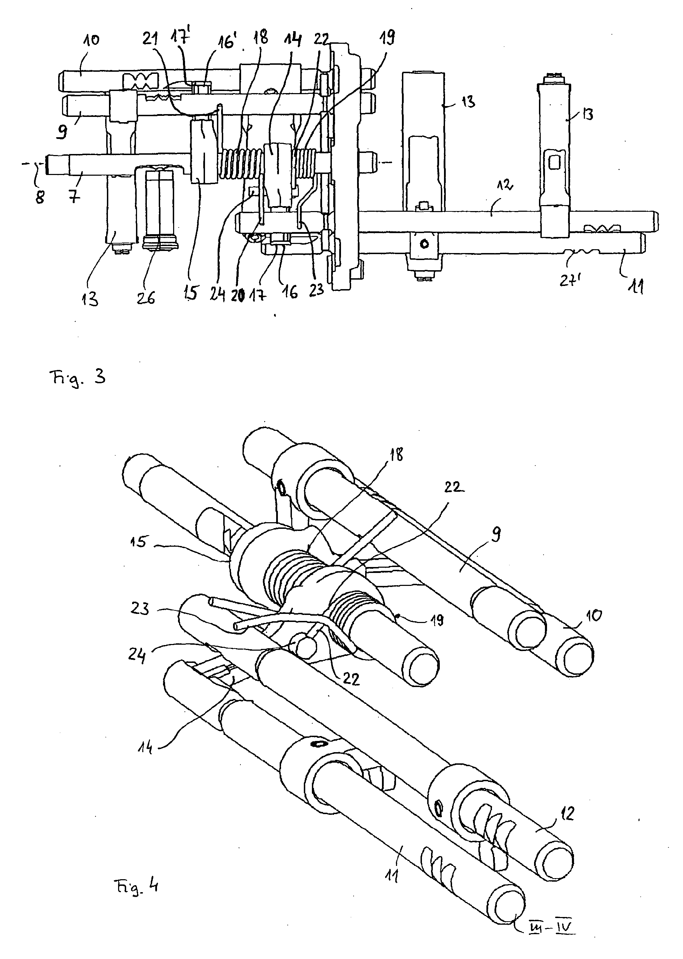

Die Hauptschaltwelle 7 weist einen ersten Schaltfinger 14 und einen zweiten Schaltfinger 15 auf. Die Schaltfinger 14, 15 sind fest mit der Hauptschaltwelle 7 verbunden. Die Schaltfinger 14, 15 dienen dazu, in Abhängigkeit eines Drehwinkels der Hauptschaltwelle 7 eine Koppelung zu einer der Schaltstangen 9, 10, 11, 12 herzustellen. Beispielsweise ist in Figur 3, die die Schaltvorrichtung 6 von oben zeigt, zu erkennen, dass in der dort dargestellten Dreh- oder Wählstellung der Hauptschaltwelle 7 ein äußeres Ende 16 des ersten Schaltfingers 14 in eine Aussparung 17 der Schaltstange 11 greift. Wird nun die Hauptschaltwelle 7 entlang ihrer Achse 8 verschoben, so wird diese Bewegung durch den ersten Schaltfinger 14 auf die Schaltstange 11 mit der Folge übertragen, dass die an der Schaltstange 11 befestigte Schaltgabel 13 bewegt wird.

Figur 3 zeigt zudem das entsprechende äußere Ende 16' des zweiten Schaltfingers 15, das in Eingriff mit der entsprechenden Aussparung 17' der Schaltstange 10 zu stehen scheint. Dies ist jedoch bei der in den Figuren 1 bis 6 gezeigten Wählstellung der Hauptschaltwelle 7 nicht der Fall. Erst wenn die Hauptschaltwelle 7 um einen bestimmten Winkel gedreht wird, greift das äußere Ende 16' des zweiten Schaltfingers 15 in die Aussparung 17' der Schaltstange 11, so dass durch axiales Verschieben der Hauptschaltwelle 7 die Schaltstange 10 axial bewegt wird.

Durch die axiale Verschiebung der Schaltstange 10 lassen sich die Vorwärtsgänge I, II einlegen. Der Rückwärtsgang R kann ein- bzw. ausgelegt werden, wenn die Hauptschaltwelle 7 über den zweiten Schaltfinger 15 mit der Schaltstange 9 gekoppelt ist. Entsprechend dienen die Schaltstange 11 dem Einlegen der Vorwärtsgänge III, IV und die Schaltstange 12 dem Ein- bzw. Auslegen der Vorwärtsgänge V, Vl. Die für das Einlegen der Vorwärtsgänge III bis VI erforderliche Koppelung mit der Hauptschaltwelle 7 erfolgt, wie oben bereits beschrieben, durch den ersten Schaltfinger 14.

Durch ein Schalten in einer der Schaltgassen 1, 2, 3, 4 wird die Hauptschaltwelle 7 axial verschoben. Auswählen oder Wählen einer der Schaltgassen führt zu einer Drehung der Hauptschaltwelle 7. Befindet sich der Handschalthebel, durch den sich die Schaltvorrichtung 6 per Hand betätigen lässt, auf dem Kreuzungspunkt von Schaltgasse 1 und Wählgasse 5, ist die Hauptschaltwelle 7 mit der Schaltstange 10 (vgl.

Figur 3) gekoppelt, so dass durch axiales Verschieben der Hauptschaltwelle 7, was durch ein Führen des Handschalthebels entlang der Schaltgasse 1 verursacht wird, der Vorwärtsgang I bzw. der Vorwärtsgang II eingelegt wird.

Die Schaltvorrichtung 6 umfasst eine Federeinrichtung, die eine erste Schenkelfeder 18 und eine zweite Schenkelfeder 19 aufweist. Die erste Schenkelfeder 18 ist in axialer Richtung zwischen den Schaltfingern 14, 15 angeordnet.

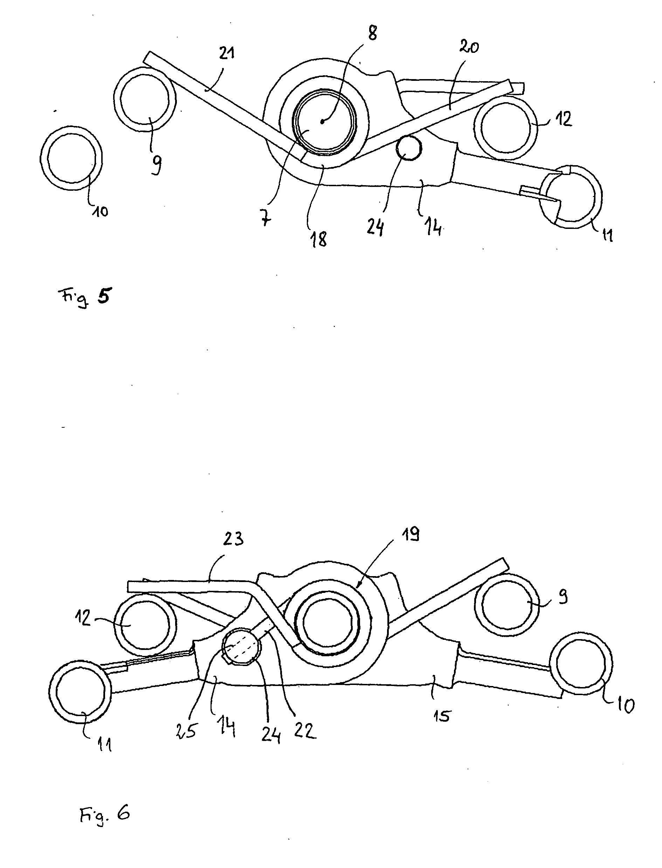

Ein erster Schenkel 20 der ersten Schenkelfeder 18 stützt sich an der Schaltstange 12 ab, während ein zweiter Schenkel 21 der ersten Schenkelfeder 18 auf der Schaltstange 9 aufliegt. Das Aufliegen der ersten Schenkelfeder 18 auf den Schaltstangen 9, 12 ist besonders gut Figur 5 zu entnehmen. Figur 5 zeigt Teile der Schaltvorrichtung in einer ersten axialen Richtung, nämlich von der linken Seite der Figuren 2 oder 3 aus betrachtet. Entsprechend der axialen Ansicht erstrecken sich Hauptschaltwelle 7 und die Schaltstangen 9, 10, 11 und 12 senkrecht zur Zeichenebene der Figur 5.

Wie auch die erste Schenkelfeder 18 sitzt die zweite Schenkelfeder 19 im wesentlichen koaxial auf der Hauptschaltwelle 7, so dass die Wendeln der Schenkelfedern 18, 19 die Hauptschaltwelle 7 umgreifen. In der Figur 3 ist zu erkennen, dass ein erster Schenkel 22 der zweiten Schenkelfeder 19 mit einem Stift 24 zusammenwirkt. Dies ist auch den Figuren 4 und 6 zu entnehmen. Während Figur 4 Teile der Schaltvorrichtung 6 in einer anderen perspektivischen Ansicht zeigt, stellt Figur 6 eine weitere axiale Ansicht dar, diesmal von der rechten Seite der Figur 2 oder 3 aus betrachtet. Der Stift 24 weist eine Bohrung 25 (in Figur 6 gestrichelt dargestellt) auf, durch die der erste Schenkel 22 der zweiten Schenkelfeder 19 geführt ist. Ein zweiter Schenkel 23 der zweiten Schenkelfeder 19 stützt sich auf der Schaltstange 12 ab. Der Schenkel 23 weist eine Kröpfung auf, die in der Ansicht der Figur 3 am deutlichsten zu erkennen ist.

Die Figuren 2 bis 6 zeigen die Hauptschaltwelle 7 in der Neutralstellung N, bei der Hauptschaltwelle 7 und die Schaltstange 11, durch die sich die Vorwärtsgänge III, IV einlegen lassen, in axialer Richtung miteinander gekoppelt sind. Die Hauptschaltwelle 7 wird durch ein Verschieben des Handschalthebels entlang der Wählgasse 5 (vgl. Figur 1) aus der Neutralstellung N heraus gedreht.

Des Weiteren ist in den Figuren 2 und 3 eine Rasteinrichtung 26 zu erkennen. Die Rasteinrichtung 26 umfasst einen Rastkörper, der mittels einer Schraubenfeder gegen einen Rastkamm 27 der Hauptschaltwelle 7 gedrückt wird. Durch das Zusammenwirken von Rasteinrichtung 26 und Rastkamm 27 rastet die Hauptschaltwelle entsprechend der Kontur des Rastkamms 27 in unterschiedlichen axialen Positionen ein, nämlich in zwei Endstellungen, in denen die Gänge I bis Vl, R eingelegt sind, oder in eine Zwischenposition, die sich auf der Wählgasse 5 befindet. Entsprechende Rastmittel sind auch an den einzelnen Schaltstangen 9, 10, 11, 12 vorgesehen, was sich an den eingebrachten Rastkämmen 27' erkennen lässt.

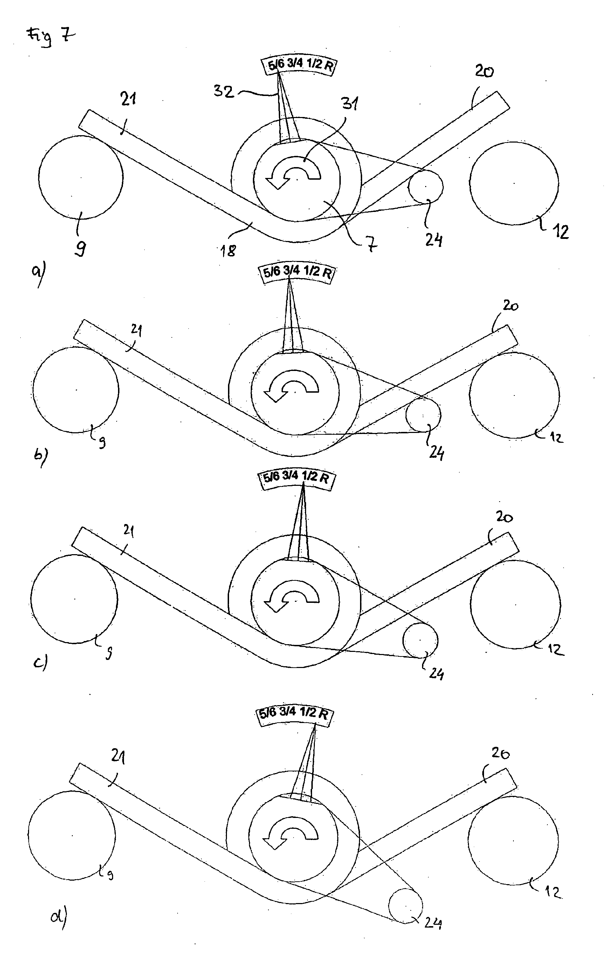

Figur 7 zeigt unterschiedliche Dreh- oder Wählstellungen der Hauptschaltwelle 7 (vgl. 7a bis 7d). Wie Figur 5 zeigt Figur 7 Teile der Schaltvorrichtung aus der ersten axialen Richtung, jedoch in schematisierter Form. So ist in Figur 7 die zweite Schenkelfeder 19 nicht dargestellt. Ein Pfeil 31 soll verdeutlichen, dass die zweite Schenkelfeder 19 ein gegen den Uhrzeigersinn gerichtetes Drehmoment auf die Hauptschaltwelle 7 ausübt. Auch fehlen in Figur 7 die Schaltfinger 14, 15. Jedoch ist der Stift 24 zu erkennen, über den sich (über den nicht dargestellten Schaltfinger 14) ein Drehmoment in die Hauptschaltwelle 7 einleiten lässt.

Die in Figur 7b dargestellte Dreh- oder Wählstellung der Hauptschaltwelle 7 entspricht der Neutralstellung N, so wie sie den Figuren 2 bis 6 zu entnehmen ist. Nur in dieser Neutralstellung N liegen die Schenkel 20, 21 der ersten Schenkelfeder 18 an den Schaltstangen 9, 12 und der Stift 24 an dem erstem Schenkel 20 an. Eine Wählanzeige 32 signalisiert, dass sich aus dieser Neutralstellung N heraus durch axiales Verschieben der Hauptschaltwelle 7 die Vorwärtsgänge III und IV (Wählanzeige 32: siehe 3/4) einlegen lassen.

Aufgrund des Drehmoments der zweiten Schenkelfeder 19 gemäß Pfeil 31 wird in Figur 7b der Stift 24 gegen den ersten Schenkel 20 der ersten Schenkelfeder 18 gedrückt. Die Vorspannung der ersten Schenkelfeder 18 bzw. auch deren Federsteifigkeit ist so bemessen, dass der erste Schenkel 20 trotz Einwirkung der zweiten Schenkelfeder 19 weiterhin gegen die Schaltstange 12 gedrückt wird, so dass er eine definierte Anlage für den Stift 24 und somit der Hauptschaltwelle 7 darstellt. Die zweite Schenkelfeder 19 stellt somit im Zusammenspiel mit der ersten Schenkelfeder 18 eine spielfreie Positionierung der Hauptschaltwelle 7 in der Neutralstellung N sicher.

Um nun von der Neutralstellung N in die Schaltgasse 3 zu gelangen, also in die Schaltgasse, bei der sich die Vorwärtsgänge V und VI einlegen lassen, muss die Hauptschaltwelle 7 gegen den Uhrzeigersinn gedreht werden, bis der in Figur 7 nicht dargestellte erste Schaltfinger 14 in eine entsprechende Aussparung der Schaltstange 12 greift. Dabei wird die erste Schenkelfeder 18 gespannt, während die zweite Schenkelfeder 19 entspannt wird (vgl. Figur 7a). Wird hingegen die Hauptschaltwelle aus der Neutralstellung N im Uhrzeigersinn gedreht, hebt der Stift 24 von dem ersten Schenkel 20 der ersten Schenkelfeder 18 ab, wobei nun die erste Schenkelfeder 18 kein Haltedrehmoment mehr auf die Hauptschaltwelle 7 ausübt. Die zweite Schenkelfeder 19 wird weiter gespannt, so dass dieser Drehbewegung im Uhrzeigersinn eine Rückstellkraft entgegenwirkt (vgl. Figur 7c). Diese Rückstellkraft vergrößert sich, wenn die Hauptschaltwelle 7 weiter im Uhrzeigersinn gedreht wird, bis der in der Figur 7 nicht dargestellte zweite Schaltfinger 15 mit der Schaltstange 9 in Eingriff kommt, um so den Rückwärtsgang R einlegen zu können.

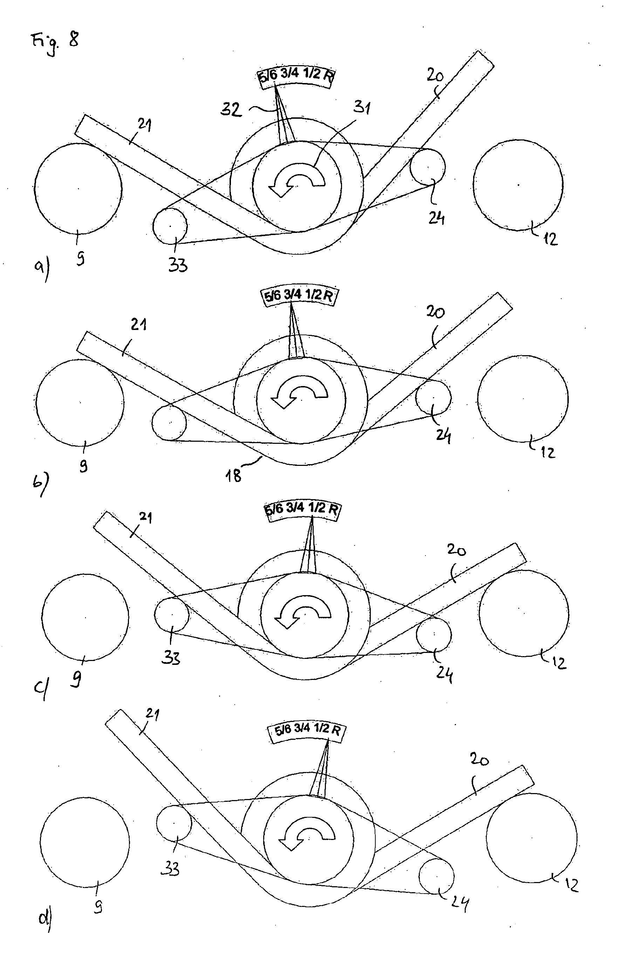

In analoger Weise zur Darstellung der Figur 7 ist in Figur 8 ein weiteres Ausführungsbeispiel dargestellt. Das Ausführungsbeispiel der Figur 8 unterscheidet sich von dem oben beschriebenen Ausführungsbeispiel dadurch, dass ein weiterer Stift 33 vorgesehen ist, der an dem nicht dargestellten zweiten Schaltfinger 15 befestigt und dadurch drehfest mit der Hauptschaltwelle 7 verbunden ist. Die erste Schenkelfeder 18 ist in Neutralstellung N (Figur 7b) zwischen den Stiften 24, 33 eingespannt. In der Neutralstellung N drückt die nicht dargestellte zweite Schenkelfeder gemäß des Pfeils 31 die Hauptschaltwelle 7 und damit die zwischen den Stiften 24, 33 eingespannte erste Schenkelfeder gegen die Schaltstange 9, an der sich der zweite Schenkel 21 abstützt. Durch diese Anordnung wird vermieden, dass sich in Neutralstellung N der erste Schenkel 20 an der Schaltstange 12 abstützt, wie dies beim Ausführungsbeispiel gemäß Figur 7 der Fall ist. Wird beispielsweise aus der Neutralstellung N der Vorwärtsgang III eingelegt, was durch axiale Verschiebung der Schaltstange 11 erfolgt, gleitet der erste Schenkel 20 nicht an der dann feststehenden Schaltstange 12 entlang, die - wie oben beschrieben - zum Einlegen der Vorwärtsgänge V und VI zuständig ist. Dadurch lassen sich die Gänge mit weniger Reibung einlegen. Auch beim Einlegen der Vorwärtsgänge I und II lassen durch die zwischen den Stiften 28, 33 eingespannte erste Schenkelfeder 18 die Reibkräfte reduzieren, da - im Gegensatz zum Ausführungsbeispiel der Figur 7 - der zweite Schenkel 21 nicht auf der Schaltstange 9 (zuständig zum Einlegen des Rückwärtsgangs R) aufliegt.

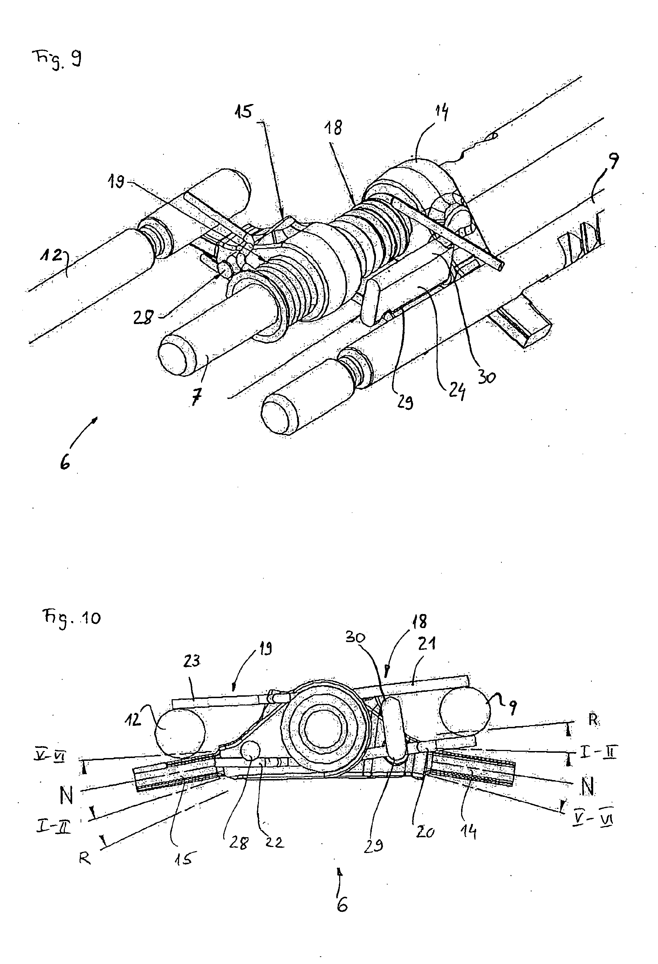

Die Figuren 9 und 10 zeigen im Ausschnitt ein weiteres Ausführungsbeispiel für die erfindungsgemäße Schaltvorrichtung. Die in den Figuren 4 und 5 dargestellten Bauteile, die zu den Bauteilen des Ausführungsbeispiels der Figuren 2 und 3 identisch oder ähnlich sind, werden mit entsprechend gleichen Bezugszeichen gekennzeichnet und gelten als eingeführt.

Auch in dem Ausführungsbeispiel der Figuren 9 und 10 sind die erste Schenkelfeder 18 und die zweite Schenkelfeder 19 im Wesentlichen koaxial zur Hauptschaltwelle 7 angeordnet. Die erste Schenkelfeder 18 ist zwischen dem ersten Schaltfinger 14 und dem zweiten Schaltfinger 15 angeordnet. Wie insbesondere der Figur 10 zu entnehmen ist, stützen sich sowohl der erste Schenkel 20 als auch der zweite Schenkel 21 der ersten Schenkelfeder 18 auf einer gleichen Schaltstange ab, nämlich auf Schaltstange 9. Die zweite Schenkelfeder 19 liegt mit ihrem zweiten Schenkel 23 an der Schaltstange 12 an und stützt sich mit ihrem ersten Schenkel 22 an einem Stift 28 ab, der sich parallel zur Hauptschaltwelle 7 erstreckt und am zweiten Schaltfinger 15 befestigt ist.

Der an dem ersten Schaltfinger 14 befestigte Stift 24 weist einen längs gestreckten Querschnitt auf. Die zweite Schenkelfeder 19 bewirkt nun, dass die Hauptschaltwelle 7 im Uhrzeigersinn (Darstellung der Figur 10 bzw. Blickrichtung in Figur 9 von links) verdreht wird, bis eine eingekerbte Unterseite 29 des Stiftes 24 an dem ersten Schenkel 20 der ersten Schenkelfeder 18 anstößt. Aufgrund der Vorspannung der ersten Schenkelfeder 18 verbleibt der erste Schenkel 20 in der in Figur 10 dargestellten Position, da die erste Schenkelfeder 18 eine Federkraft auf den Schenkel 20 ausübt, die größer ist als die Federkraft der zweiten Schenkelfeder 19.

Die Figuren 9 und 10 zeigen die Schaltvorrichtung 6 in der Neutralstellung N, in der die zweite Schenkelfeder 19 die Hauptschaltwelle 7 gegen einen Schenkel (hier der erste Schenkel 20) der ersten Schenkelfeder 18 drückt. Wird nun in die Hauptschaltwelle 7 von außen ein Drehmoment im Uhrzeigersinn eingeleitet, wird die Hauptschaltwelle 7 gegen die Federkraft der ersten Schenkelfeder 18 und mit der Federkraft der zweiten Schenkelfeder 19 bewegt. Dabei nimmt der Stift 24 den ersten Schenkel der ersten Schenkelfeder 18 mit, so dass dieser von der Schaltstange 9 abhebt.

Wirkt das Drehmoment von außen gegen den Uhrzeigersinn, wieder ausgehend von der Neutralstellung N, hebt der Stift 24 von dem ersten Schenkel 20 der ersten Schenkelfeder 18 ab, so dass von der Neutralstellung N in die Drehstellung, in der die Vorwärtsgänge I, II angewählt sind, nur die zweite Schenkelfeder 19 auf die Hauptschaltwelle 7 wirkt. In dieser Drehstellung stößt eine eingekerbte Oberseite 30 an den zweiten Schenkel 21 der ersten Schenkelfeder 18. Durch weitere Drehung gegen den Uhrzeigersinn wird bei der Drehung von der Drehstellung der Gänge I, II zur Drehstellung des Rückwärtsganges R nicht nur die zweite Schenkelfeder 19, sondern nun auch zusätzlich die erste Schenkelfeder 18 gespannt wird. Dies führt zu einem sprunghaft größeren Widerstand von der Schaltgasse 1 in die Schaltgasse 4 mit dem Rückwärtsgang R.

Wenn das Drehmoment der ersten Schenkelfeder 18 in der Neutralstellung N der Hauptschaltwelle 7 doppelt so groß ist wie das Drehmoment der zweiten Schenkelfeder 19, resultiert daraus ein jeweils gleich großes Rückstellmoment, wenn die Hauptschaltwelle 7 im Uhrzeigersinn oder gegen den Uhrzeigersinn gedreht wird. Bei der Drehbewegung der Hauptschaltwelle 7 von der Drehstellung der Gänge I, II in die Drehstellung des Rückwärtsgangs R stellt sich dann eine in etwa dreifach höhere Rückstellkraft ein, da nun die Schenkelfedern 18, 19 parallel gespannt werden.

### Schaltvorrichtung mit Federeinrichtung für ein Wechselgetriebe

### Bezugszeichenliste

- 1: Schaltgasse
- 2: Schaltgasse
- 3: Schaltgasse
- 4: Schaltgasse
- 5: Wählgasse
- 6: Schaltvorrichtung
- 7: Hauptschaltwelle
- 8: Achse
- 9: Schaltstange
- 10: Schaltstange
- 11: Schaltstange
- 12: Schaltstange
- 13: Schaltgabel
- 14: erster Schaltfinger
- 15: zweiter Schaltfinger
- 16: äußeres Ende
- 17: Aussparung
- 18: erste Schenkelfeder
- 19: zweite Schenkelfeder
- 20: erster Schenkel
- 21: zweiter Schenkel
- 22: erster Schenkel
- 23: zweiter Schenkel
- 24: Stift
- 25: Kopf
- 26: Rasteinrichtung
- 27: Rastkamm
- 28: Stift
- 29: Unterseite
- 30: Oberseite
- 31: Pfeil
- 32: Wählanzeige
- 33: Stift

## Patentansprüche

1. Schaltvorrichtung (6) für ein Wechselgetriebe, mit einer Hauptschaltwelle (7), die axial verschiebbar und um ihre Achse (8) drehbar ist und wenigstens einen Schaltfinger (14, 15) aufweist, mit mehreren axial verschiebbaren Schaltstangen (9, 10, 11, 12), mit denen die Hauptschaltwelle (7) über den Schaltfinger (14, 15) koppelbar ist, um die Schaltstangen (9, 10, 11, 12) mittels der Hauptschaltwelle (7) axial verschieben zu können, und mit einer Federeinrichtung, die einer Drehung der Hauptschaltwelle (7) aus einer Neutralstellung (N) entgegenwirkt, und die eine erste Schenkelfeder (18) und ein Federelement (19) aufweist,
**dadurch gekennzeichnet, dass** ein erster Schenkel (20) der ersten Schenkelfeder (18) als Anschlag dient, gegen den das Federelement (19) die Hauptschaltwelle (7) in die Neutralstellung (N) drückt.

2. Schaltvorrichtung (6) nach Anspruch 1, **dadurch gekennzeichnet, dass** das Federelement als eine zweite Schenkelfeder (19) ausgebildet ist.

3. Schaltvorrichtung (6) nach Anspruch 1 oder 2, **dadurch gekennzeichnet, dass** ein Drehmoment der ersten Schenkelfeder (18) in der Neutralstellung (N) in etwa doppelt so groß ist wie ein Drehmoment des Federelements (19), mit dem es in Neutralstellung (N) die Hauptschaltwelle (7) gegen den ersten Schenkel (20) der ersten Schenkelfeder (18) drückt.

4. Schaltvorrichtung (6) nach Anspruch 2 oder 3, **dadurch gekennzeichnet, dass** Wendeln der ersten Schenkelfeder (18) und/oder der zweiten Schenkelfeder (19) die Hauptschaltwelle (7) umgreifen.

5. Schaltvorrichtung (6) nach Anspruch 4, **dadurch gekennzeichnet, dass** ein Innendurchmesser der Wendeln im Wesentlichen einem Außendurchmesser der Hauptschaltwelle (7) entspricht.

6. Schaltvorrichtung (6) nach einem der Ansprüche 1 bis 5, **dadurch gekennzeichnet, dass** der erste Schenkel (20) und/oder ein zweiter Schenkel (21) der ersten Schenkelfeder (18) sich zumindest in Neutralstellung (N) der Hauptschaltwelle (7) an wenigstens einer der Schaltstangen (9, 10, 11, 12) abstützen.

7. Schaltvorrichtung (6) nach einem der Ansprüche 1 bis 6, **dadurch gekennzeichnet, dass** der Schaltfinger (14, 15) einen Stift (24) aufweist, mit dem sich die Hauptschaltwelle (7) in Neutralstellung (N) an dem ersten Schenkel (20) der ersten Schenkelfeder (18) abstützt.

8. Schaltvorrichtung (6) nach Anspruch 7, **dadurch gekennzeichnet, dass** sich an dem Stift (24) ein erster Schenkel (22) der zweiten Schenkelfeder (19) abstützt.

9. Schaltvorrichtung (6) nach Anspruch 7, **dadurch gekennzeichnet, dass** die Hauptschaltwelle (7) einen weiteren Schaltfinger (15) umfasst.

10. Schaltvorrichtung (6) nach Anspruch 9, **dadurch gekennzeichnet, dass** der weitere Schaltfinger (15) einen Stift (28) aufweist, an dem sich der erste Schenkel (22) der zweiten Schenkelfeder (19) abstützt.

11. Schaltvorrichtung (6) nach Anspruch 9, **dadurch gekennzeichnet, dass** der weitere Schaltfinger (15) einen Einspannstift (28) aufweist, an dem sich der zweite Schenkel (21) der ersten Schenkelfeder (18) abstützt, wodurch die erste Schenkelfeder (18) zwischen Stift (24) und Einspannstift (33) eingespannt ist.

12. Schaltvorrichtung (6) nach Anspruch 6 bis 11, **dadurch gekennzeichnet, dass** in Neutralstellung (N) und in anderen Dreh- oder Wählstellungen der Hauptschaltwelle (7) sich jeweils nur einer der beiden Schenkel (20, 21) der ersten Schenkelfeder (18) an einer der Schaltstangen (9, 10,11, 12) abstützt.

13. Schaltvorrichtung (6) nach einem der Ansprüche 2 bis 12, **dadurch gekennzeichnet, dass** ein zweiter Schenkel (23) der zweiten Schenkelfeder (19) sich an einer der Schaltstangen (9, 10, 11, 12) abstützt.

14. Schaltvorrichtung (6) nach einem der Ansprüche 6 bis 11, **dadurch gekennzeichnet, dass** der erste Schenkel (20) und der zweite Schenkel (21) der ersten Schenkelfeder (18) sich im Wesentlichen parallel zueinander erstrecken und sich in Neutralstellung (N) an einer gleichen Schaltstange (12) abstützen.

15. Schaltvorrichtung (6) nach Anspruch 14, **dadurch gekennzeichnet, dass** der Stift (24) zwischen den parallel verlaufenden Schenkeln (20, 21) angeordnet ist und ab einem bestimmten Drehwinkel aus der Neutralstellung (N) heraus gegen den zweiten Schenkel (21) der ersten Schenkelfeder (18) stößt.

## Claims

1. Shifting device (6) for a change speed gearbox, having a main shifting shaft (7) which can be displaced axially and rotated about its axis (8) and has at least one shifting finger (14, 15), having a plurality of axially displaceable shifting rods (9, 10, 11, 12) with which the main shifting shaft (7) can be coupled by means of the shifting finger (14, 15) in order to be able to move the shifting rods (9, 10, 11, 12) axially by means of the main shifting shaft (7), and having a spring device which counteracts a rotation of the main shifting shaft (7) out of a neutral position (N), and which has a first leg spring (18) and a spring element (19), **characterized in that** a first leg (20) of the first leg spring (18) serves as a stop against which the spring element (19) presses the main shifting shaft (7) into the neutral position (N).

2. Shifting device (6) according to Claim 1, **characterized in that** the spring element is embodied as a second leg spring (19).

3. Shifting device (6) according to Claim 1 or 2, **characterized in that** a torque of the first leg spring (18) in the neutral position (N) is approximately twice as large as a torque of the spring element (19) with which it presses the main shifting shaft (7) against the first leg (20) of the first leg spring (18) in the neutral position (N).

4. Shifting device (6) according to Claim 2 or 3, **characterized in that** coils of the first leg spring (18) and/or of the second leg spring (19) engage around the main shifting shaft (7).

5. Shifting device (6) according to Claim 4, **characterized in that** an internal diameter of the coils corresponds essentially to an external diameter of the main shifting shaft (7).

6. Shifting device (6) according to one of Claims 1 to 5, **characterized in that** the first leg (20) and/or a second leg (21) of the first leg spring (18) are supported on at least one of the shifting rods (9, 10, 11, 12), at least in the neutral position (N) of the main shifting shaft (7).

7. Shifting device (6) according to one of Claims 1 to 6, **characterized in that** the shifting finger (14, 15) has a pin (24) with which the main shifting shaft (7) is supported on the first leg (20) of the first leg spring (18) in the neutral position (N).

8. Shifting device (6) according to Claim 7, **characterized in that** a first leg (22) of the second leg spring (19) is supported on the pin (24).

9. Shifting device (6) according to Claim 7, **characterized in that** the main shifting shaft (7) surrounds a further shifting finger (15).

10. Shifting device (6) according to Claim 9, **characterized in that** the further shifting finger (15) has a pin (28) on which the first leg (22) of the second leg spring (19) is supported.

11. Shifting device (6) according to Claim 9, **characterized in that** the further shifting finger (15) has a clamping-in pin (28) on which the second leg (21) of the first leg spring (18) is supported, as a result of which the first leg spring (18) is clamped in between the pin (24) and clamping-in pin (33).

12. Shifting device (6) according to Claims 6 to 11, **characterized in that** in the neutral position (N) and in other rotational positions or selection positions of the main shifting shaft (7), in each case just one of the two legs (20, 21) of the first leg spring (18) is supported on one of the shifting rods (9, 10, 11, 12).

13. Shifting device (6) according to one of Claims 2 to 12, **characterized in that** a second leg (23) of the second leg spring (19) is supported on one of the shifting rods (9, 10, 11, 12).

14. Shifting device (6) according to one of Claims 6 to 11, **characterized in that** the first leg (20) and the second leg (21) of the first leg spring (18) extend essentially parallel to one another and are supported on the same shifting rod (12) in the neutral position (N).

15. Shifting device (6) according to Claim 14, **characterized in that** the pin (24) is arranged between the legs (20, 21) which run in parallel, and starting from a certain rotational angle said pin (24) jumps out of the neutral position (N) against the second leg (21) of the first leg spring (18).

## Revendications

1. Dispositif de sélection (6) pour une boîte de vitesses, comprenant un arbre de sélection principal (7), qui est déplaçable axialement et peut tourner autour de son axe (8), et qui présente au moins un doigt de sélection (14, 15), plusieurs tiges de sélection (9, 10, 11, 12) déplaçables axialement, auxquelles l'arbre de sélection principal (7) peut être accouplé par le biais du doigt de sélection (14, 15), afin de pouvoir déplacer axialement les tiges de sélection (9, 10, 11, 12) au moyen de l'arbre de sélection principal (7), et un dispositif à ressort qui agit à l'encontre d'une rotation de l'arbre de sélection principal (7) hors d'une position neutre (N), et qui présente un premier ressort à branches (18) et un élément de ressort (19), **caractérisé en ce qu'**une première branche (20) du premier ressort à branches (18) sert de butée contre laquelle l'élément de ressort (19) presse l'arbre de sélection principal (7) dans la position neutre (N).

2. Dispositif de sélection (6) selon la revendication 1, **caractérisé en ce que** l'élément de ressort est réalisé sous forme de deuxième ressort à branches (19).

3. Dispositif de sélection (6) selon la revendication 1 ou 2, **caractérisé en ce qu'**un couple du premier ressort à branches (18) dans la position neutre (N) est approximativement deux fois plus grand qu'un couple de l'élément de ressort (19), avec lequel il presse dans la position neutre (N) l'arbre de sélection principal (7) contre la première branche (20) du premier ressort à branches (18).

4. Dispositif de sélection (6) selon la revendication 2 ou 3, **caractérisé en ce que** des spires du premier ressort à branches (18) et/ou du deuxième ressort à branches (19) viennent en prise autour de l'arbre de sélection principal (7).

5. Dispositif de sélection (6) selon la revendication 4, **caractérisé en ce qu'**un diamètre intérieur des spires correspond essentiellement à un diamètre extérieur de l'arbre de sélection principal (7).

6. Dispositif de sélection (6) selon l'une quelconque des revendications 1 à 5, **caractérisé en ce que** la première branche (20) et/ou une deuxième branche (21) du premier ressort à branches (18) s'appuient au moins dans la position neutre (N) de l'arbre de sélection principal (7) contre au moins l'une des tiges de sélection (9, 10, 11, 12).

7. Dispositif de sélection (6) selon l'une quelconque des revendications 1 à 6, **caractérisé en ce que** le doigt de sélection (14, 15) présente une goupille (24) avec laquelle l'arbre de sélection principal (7) s'appuie dans la position neutre (N) contre la première branche (20) du premier ressort à branches (18).

8. Dispositif de sélection (6) selon la revendication 7, **caractérisé en ce que** sur la goupille (24) s'appuie une première branche (22) du deuxième ressort à branches (19).

9. Dispositif de sélection (6) selon la revendication 7, **caractérisé en ce que** l'arbre de sélection principal (7) comprend un autre doigt de sélection (15).

10. Dispositif de sélection (6) selon la revendication 9, **caractérisé en ce que** l'autre doigt de sélection (15) présente une goupille (28) sur laquelle s'appuie la première branche (22) du deuxième ressort à branches (19).

11. Dispositif de sélection (6) selon la revendication 9, **caractérisé en ce que** l'autre doigt de sélection (15) présente une goupille de serrage (28) sur laquelle s'appuie la deuxième branche (21) du premier ressort à branches (18), de sorte que le premier ressort à branches (18) soit serré entre la goupille (24) et la goupille de serrage (33).

12. Dispositif de sélection (6) selon les revendications 6 à 11, **caractérisé en ce que** dans la position neutre (N) et dans d'autres positions de rotation ou de sélection de l'arbre de sélection principal (7), seulement l'une des deux branches (20, 21) du premier ressort à branches (18) s'appuie à chaque fois sur l'une des tiges de sélection (9, 10, 11, 12).

13. Dispositif de sélection (6) selon l'une quelconque des revendications 2 à 12, **caractérisé en ce qu'**une deuxième branche (23) du deuxième ressort à branches (19) s'appuie contre l'une des tiges de sélection (9, 10, 11, 12).

14. Dispositif de sélection (6) selon l'une quelconque des revendications 6 à 11, **caractérisé en ce que** la première branche (20) et la deuxième branche (21) du premier ressort à branches (18) s'étendent essentiellement parallèlement l'une à l'autre et s'appuient dans la position neutre (N) contre une tige de sélection identique (12).

15. Dispositif de sélection (6) selon la revendication 14, **caractérisé en ce que** la goupille (24) est disposée entre les branches s'étendant parallèlement (20, 21) et à partir d'un angle de rotation déterminé hors de la position neutre (N) bute contre la deuxième branche (21) du premier ressort à branches (18).
